# EUROPEAN PATENT APPLICATION

(11) **EP 4 712 528 A1**
(43) Date of publication of application: **18.03.2026**
(21) Application number: 23935965.6
(22) Date of filing: 06.05.2023
(51) Int. Cl.: H04W 12/06, H04W 12/72, H04L 9/40

(54) **GENERIC PUBLIC SUBSCRIPTION IDENTIFIER VERIFICATION METHODS, AND APPARATUSES**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN); LIU, Jianning, Beijing 100085 (CN); WANG, Bin, Beijing 100085 (CN)
(74) Representative: Dehns Germany Partnerschaft mbB
(86) International application number: PCT/CN2023/092617
(87) International publication number: WO 2024/229636

(57) **Abstract**

Disclosed in the embodiments of the present disclosure are generic public subscription identifier verification methods and apparatuses, which can be used in the technical field of communications. A method implemented by an application function (AF) entity comprises: sending a first request to a network exposure function (NEF) entity; and receiving a first response sent by the NEF entity, the first response containing a verification result of a first generic public subscription identifier (GPSI), or the first response containing a second GPSI. Thus, the present disclosure verifies first GPSIs of terminal devices, so as to prevent AF entities from providing unauthorized services or avoid invalid charging, thus improving edge service reliability.

## Description

### TECHNICAL FIELD

The disclosure relates to the communication field, in particular to a method for verifying a generic public subscription identifier (GPSI) and an apparatus.

### BACKGROUND

In edge application service scenarios, an edge configuration server (ECS) or an edge enabler server (EES) may provide services for an edge enabler client (EEC) based on the GPSI provided by the EEC.

### SUMMARY

Embodiments of the disclosure provide a method for verifying a GPSI and an apparatus. By verifying a first GPSI of a terminal, an application function (AF) entity may be prevented from providing unauthorized services, and charging invalidation may be avoided, thereby improving a reliability of edge services.

According to a first aspect of the embodiments of the disclosure, a method for verifying a GPSI is provided. The method is performed by an AF entity, and includes: sending a first request to a network exposure function (NEF) entity; and receiving a first response sent by the NEF entity, in which the first response includes a verification result of a first GPSI, or the first response includes a second GPSI.

According to a second aspect of the embodiments of the disclosure, a method for verifying a GPSI is provided. The method is performed by a NEF entity, and includes: receiving a first request sent by an AF entity; sending a second request to a bootstrapping server function (BSF) entity; receiving a second response sent by the BSF entity; and sending a first response to the AF entity, in which the first response includes a verification result of a first GPSI, or the first response includes a second GPSI.

According to a third aspect of the embodiments of the disclosure, a method for verifying a GPSI is provided. The method is performed by a BSF entity, and includes: receiving a second request sent by a NEF entity; determining a subscription permanent identifier (SUPI); determining a second response based on the SUPI, in which the second response is used to assist in determining a verification result of a first GPSI; and sending the second response to the NEF entity.

According to a fourth aspect of the embodiments of the disclosure, a method for verifying a GPSI is provided. The method is performed by a UDM entity, and includes: receiving a service request sent by a first entity, in which the first entity is a NEF entity or a BSF entity, and the service request includes an SUPI; obtaining a second GPSI associated with the SUPI; generating a service response based on the second GPSI; and sending the service response to the first entity.

According to a fifth aspect of the embodiments of the disclosure, a communication apparatus with part or all of functions of the AF entity in the method of the first aspect above is provided. For example, the functions of the communication apparatus may include part or all of the functions in the embodiments of the disclosure, or may include functions of implementing any single embodiment of the disclosure independently. The functions may be implemented by hardware, or by hardware executing corresponding software. The hardware or software includes one or more units or modules corresponding to the above-mentioned functions.

In some implementations, the communication apparatus may include a transceiver module and a processing module. The processing module is configured to support the communication apparatus in performing the corresponding functions in the above method. The transceiver module is configured to support communication between the communication apparatus and other devices.

The communication apparatus may further include a storage module. The storage module is configured to be coupled with the transceiver module and the processing module, and stores computer programs and data necessary for the communication apparatus.

In some implementations, the communication apparatus includes:
a transceiver module configured to: send a first request to a NEF entity; and receive a first response sent by the NEF entity, in which the first response includes a verification result of a first GPSI, or the first response includes a second GPSI.

According to a sixth aspect of the embodiments of the disclosure, a communication apparatus with part or all of functions of the NEF entity in the method of the second aspect above is provided. For example, the functions of the communication apparatus may include part or all of the functions in the embodiments of the disclosure, or may include functions of implementing any single embodiment of the disclosure independently. The functions may be implemented by hardware, or by hardware executing corresponding software. The hardware or software includes one or more units or modules corresponding to the above-mentioned functions.

In some implementations, the communication apparatus may include a transceiver module and a processing module. The processing module is configured to support the communication apparatus in performing the corresponding functions in the above method. The transceiver module is configured to support communication between the communication apparatus and other devices. The communication apparatus may further include a storage module. The storage module is configured to be coupled with the transceiver module and the processing module, and stores computer programs and data necessary for the communication apparatus.

In some implementations, the communication apparatus includes:
a transceiver module, configured to: receive a first request sent by an AF entity; send a second request to a BSF entity; receive a second response sent by the BSF entity; and send a first response to the AF entity, in which the first response includes a verification result of a first GPSI, or the first response includes a second GPSI.

According to a seventh aspect of the embodiments of the disclosure, a communication apparatus with part or all of functions of the BSF entity in the method of the third aspect above is provided. For example, the functions of the communication apparatus may include part or all of the functions in the embodiments of the disclosure, or may include functions of implementing any single embodiment of the disclosure independently. The functions may be implemented by hardware, or by hardware executing corresponding software. The hardware or software includes one or more units or modules corresponding to the above-mentioned functions.

In some implementations, the communication apparatus may include a transceiver module and a processing module. The processing module is configured to support the communication apparatus in performing the corresponding functions in the above method. The transceiver module is configured to support communication between the communication apparatus and other devices. The communication apparatus may further include a storage module. The storage module is configured to be coupled with the transceiver module and the processing module, and stores computer programs and data necessary for the communication apparatus.

In some implementations, the communication apparatus includes:
a transceiver module, configured to receive a second request sent by a NEF entity; and
a processing module, configured to determine an SUPI.

The processing module is further configured to determine a second response based on the SUPI, and the second response is used to assist in determining a verification result of a first GPSI.

The transceiver module is further configured to send the second response to the NEF entity.

According to an eighth aspect of the embodiments of the disclosure, a communication apparatus with part or all of functions of the UDM entity in the method of the fourth aspect above is provided. For example, the functions of the communication apparatus may include part or all of the functions in the embodiments of the disclosure, or may include functions of implementing any single embodiment of the disclosure independently. The functions may be implemented by hardware, or by hardware executing corresponding software. The hardware or software includes one or more units or modules corresponding to the above-mentioned functions.

In some implementations, the communication apparatus may include a transceiver module and a processing module. The processing module is configured to support the communication apparatus in performing the corresponding functions in the above method. The transceiver module is configured to support communication between the communication apparatus and other devices. The communication apparatus may further include a storage module. The storage module is configured to be coupled with the transceiver module and the processing module, and stores computer programs and data necessary for the communication apparatus.

In some implementations, the communication apparatus includes:
a transceiver module, configured to receive a service request sent by a first entity, in which the first entity is a NEF entity or a BSF entity, and the service request includes an SUPI; and
a processing module, configured to obtain a second GPSI associated with the SUPI.

The processing module is further configured to generate a service response based on the second GPSI.

The transceiver module is further configured to send the service response to the first entity.

According to a ninth aspect of the embodiments of the disclosure, a communication apparatus is provided, which includes a processor. When the processor invokes a computer program in a memory, the processor is caused to execute the method in the first aspect above.

According to a tenth aspect of the embodiments of the disclosure, a communication apparatus is provided, which includes a processor. When the processor invokes a computer program in a memory, the processor is caused to execute the method in the second aspect above.

According to an eleventh aspect of the embodiments of the disclosure, a communication apparatus is provided, which includes a processor. When the processor invokes a computer program in a memory, the processor is caused to execute the method in the third aspect above.

According to a twelfth aspect of the embodiments of the disclosure, a communication apparatus is provided, which includes a processor. When the processor invokes a computer program in a memory, the processor is caused to execute the method in the fourth aspect above.

According to a thirteenth aspect of the embodiments of the disclosure, a communication apparatus is provided, which includes a processor and a memory storing a computer program that, when executed by the processor, causes the communication apparatus to execute the method in the first aspect above.

According to a fourteenth aspect of the embodiments of the disclosure, a communication apparatus is provided, which includes a processor and a memory storing a computer program that, when executed by the processor, causes the communication apparatus to execute the method in the second aspect above.

According to a fifteenth aspect of the embodiments of the disclosure, a communication apparatus is provided, which includes a processor and a memory storing a computer program that, when executed by the processor, causes the communication apparatus to execute the method in the third aspect above.

According to a sixteenth aspect of the embodiments of the disclosure, a communication apparatus is provided, which includes a processor and a memory storing a computer program that, when executed by the processor, causes the communication apparatus to execute the method in the fourth aspect above.

According to a seventeenth aspect of the embodiments of the disclosure, a communication apparatus is provided, which includes a processor and an interface circuit. The interface circuit is configured to receive code instructions and transmit the code instructions to the processor, and the processor is configured to run the code instructions to enable the communication apparatus to perform the method in the first aspect above.

According to an eighteenth aspect of the embodiments of the disclosure, a communication apparatus is provided, which includes a processor and an interface circuit. The interface circuit is configured to receive code instructions and transmit the code instructions to the processor, and the processor is configured to run the code instructions to enable the communication apparatus to perform the method in the second aspect above.

According to a nineteenth aspect of the embodiments of the disclosure, a communication apparatus is provided, which includes a processor and an interface circuit. The interface circuit is configured to receive code instructions and transmit the code instructions to the processor, and the processor is configured to run the code instructions to enable the communication apparatus to perform the method in the third aspect above.

According to a twentieth aspect of the embodiments of the disclosure, a communication apparatus is provided, which includes a processor and an interface circuit. The interface circuit is configured to receive code instructions and transmit the code instructions to the processor, and the processor is configured to run the code instructions to enable the communication apparatus to perform the method in the fourth aspect above.

According to a twenty-first aspect of the embodiments of the disclosure, a communication system is provided, which includes the communication apparatus in the fifth to eighth aspects, or the communication apparatus in the ninth to twelfth aspects, or the communication apparatus in the thirteenth to sixteenth aspects, or the communication apparatus in the seventeenth to twentieth aspects.

According to a twenty-second aspect of the embodiments of the disclosure, a computer-readable storage medium is provide. The computer-readable storage medium is configured for storing instructions used by the above-mentioned receiving end. When the instructions are executed, the receiving end is enabled to perform the method in the first aspect above.

According to a twenty-third aspect of the embodiments of the disclosure, a computer-readable storage medium is provide. The computer-readable storage medium is configured for storing instructions used by the above-mentioned sending end. When the instructions are executed, the sending end is enabled to perform the method in the second aspect above.

According to a twenty-fourth aspect of the embodiments of the disclosure, a computer-readable storage medium is provide. The computer-readable storage medium is configured for storing instructions used by the above-mentioned sending end. When the instructions are executed, the sending end is enabled to perform the method in the third aspect above.

According to a twenty-fifth aspect of the embodiments of the disclosure, a computer-readable storage medium is provide. The computer-readable storage medium is configured for storing instructions used by the above-mentioned sending end. When the instructions are executed, the sending end is enabled to perform the method in the fourth aspect above.

According to a twenty-sixth aspect of the embodiments of the disclosure, a computer program product including a computer program is provide. When the computer program product is run on a computer, the computer is caused to execute the method in the first aspect above.

According to a twenty-seventh aspect of the embodiments of the disclosure, a computer program product including a computer program is provide. When the computer program product is run on a computer, the computer is caused to execute the method in the second aspect above.

According to a twenty-eighth aspect of the embodiments of the disclosure, a computer program product including a computer program is provide. When the computer program product is run on a computer, the computer is caused to execute the method in the third aspect above.

According to a twenty-ninth aspect of the embodiments of the disclosure, a computer program product including a computer program is provide. When the computer program product is run on a computer, the computer is caused to execute the method in the fourth aspect above.

According to thirtieth aspect of the embodiments of the disclosure, a chip system is provide, which includes at least one processor and at least one interface. The chip system is configured to support a receiving end in implementing the functions involved in the first aspect (for example, determining or processing at least one of data or information involved in the above method). In a possible design, the chip system further includes a memory for storing necessary computer programs and data for the receiving end. The chip system may be composed of chips, or include chips and other discrete components.

According to thirty-first aspect of the embodiments of the disclosure, a chip system is provide, which includes at least one processor and at least one interface. The chip system is configured to support a sending end in implementing the functions involved in the second aspect (for example, determining or processing at least one of data or information involved in the above method). In a possible design, the chip system further includes a memory for storing necessary computer programs and data for the sending end. The chip system may be composed of chips, or include chips and other discrete components.

According to thirty-second aspect of the embodiments of the disclosure, a chip system is provide, which includes at least one processor and at least one interface. The chip system is configured to support a sending end in implementing the functions involved in the third aspect (for example, determining or processing at least one of data or information involved in the above method). In a possible design, the chip system further includes a memory for storing necessary computer programs and data for the sending end. The chip system may be composed of chips, or include chips and other discrete components.

According to thirty-third aspect of the embodiments of the disclosure, a chip system is provide, which includes at least one processor and at least one interface. The chip system is configured to support a sending end in implementing the functions involved in the fourth aspect (for example, determining or processing at least one of data or information involved in the above method). In a possible design, the chip system further includes a memory for storing necessary computer programs and data for the sending end. The chip system may be composed of chips, or include chips and other discrete components.

According to thirty-fourth aspect of the embodiments of the disclosure, a computer program is provided, which, when run on a computer, causes the computer to execute the method in the first aspect above.

According to thirty-fifth aspect of the embodiments of the disclosure, a computer program is provided, which, when run on a computer, causes the computer to execute the method in the second aspect above.

According to thirty-sixth aspect of the embodiments of the disclosure, a computer program is provided, which, when run on a computer, causes the computer to execute the method in the third aspect above.

According to thirty-seventh aspect of the embodiments of the disclosure, a computer program is provided, which, when run on a computer, causes the computer to execute the method in the fourth aspect above.

### BRIEF DESCRIPTION OF THE DRAWINGS

To more clearly illustrate the technical solutions in the embodiments of the disclosure or the background art, the drawings required for use in the embodiments of the disclosure or the background art are described below.
FIG. 1 is a schematic diagram of a communication system provided by the disclosure.
FIG. 2 is a flowchart of a method for verifying a GPSI provided by an embodiment of the disclosure.
FIG. 3 is a flowchart of a method for verifying a GPSI provided by another embodiment of the disclosure.
FIG. 4 is a flowchart of a method for verifying a GPSI provided by yet another embodiment of the disclosure.
FIG. 5 is a flowchart of a method for verifying a GPSI provided by yet another embodiment of the disclosure.
FIG. 6 is a flowchart of a method for verifying a GPSI provided by yet another embodiment of the disclosure.
FIG. 7 is a flowchart of a method for verifying a GPSI provided by yet another embodiment of the disclosure.
FIG. 8 is a signaling interaction diagram of a method for verifying a GPSI provided by an embodiment of the disclosure.
FIG. 9 is a signaling interaction diagram of a method for verifying a GPSI provided by an embodiment of the disclosure.
FIG. 10 is a signaling interaction diagram of a method for verifying a GPSI provided by an embodiment of the disclosure.
FIG. 11 is a signaling interaction diagram of a method for verifying a GPSI provided by an embodiment of the disclosure.
FIG. 12 is a signaling interaction diagram of a method for verifying a GPSI provided by an embodiment of the disclosure.
FIG. 13 is a signaling interaction diagram of a method for verifying a GPSI provided by an embodiment of the disclosure.
FIG. 14 is a schematic diagram of a communication apparatus provided by an embodiment of the disclosure.
FIG. 15 is a schematic diagram of a communication apparatus provided by another embodiment of the disclosure.
FIG. 16 is a schematic diagram of a chip provided by an embodiment of the disclosure.

### DETAILED DESCRIPTION

To facilitate understanding of the technical solutions of the disclosure, the following briefly describes some terms involved in the embodiments of the disclosure.

### 1. Application function (AF)

AF is a functional network element on a core network side. The AF may interact with the 3rd Generation Partnership Project (3GPP) core network to provide services and supports the following functions: an impact of an application side on service flow routing; accessing to a network exposure function; exchanging with a policy framework for policy control; an operator-trusted AF directly interacting with relevant network functions according to an operator's deployment. An AF that the operator does not allow direct access to network function shall interact with relevant network functions via a network exposure function (NEF) using an external capability exposure architecture. In the disclosure, an AF entity may be an edge configuration server (ECS) and/or an edge enabler server (EES).

### 2. Network exposure function (NEF)

NEF is another functional network element on the core network side. All 3GPP network elements open their capabilities to other network elements via the NEF. The NEF stores relevant information in a unified data repository (UDR) and may also obtain relevant information from the UDR. The NEF may only access the UDR of a same public land mobile network (PLMN) as itself. The NEF provides corresponding security guarantees to ensure the security of external applications accessing the 3GPP network, and converts information between inside and outside of 3GPP-for example, conversion between an AF service identifier and a data network name (DNN) inside a 5G core network, single network slice selection assistance information (S-NSSAI), etc. In particular, network and user-sensitive information should be hidden from external network elements. The NEF may obtain relevant information of other network elements by accessing the UDR, and the NEF may only access the UDR of the same PLMN as itself.

### 3. Bootstrapping server function (BSF)

BSF is a core network element of the generic bootstrapping architecture (GBA). The BSF and a terminal (or user equipment (UE)) implement authentication via a authentication and key agreement (AKA) protocol, and negotiate an application key to be subsequently used for communication between the UE and an network application function (NAF). The BSF may set a lifetime of the key according to a local policy.

### 4. Unified data management (UDM)

UDM is responsible for the management of user identifiers, subscription data, and authentication data, as well as the registration management of user service network elements (such as an access and mobility management function (AMF), a session management function (SMF), etc., that currently provide services for the terminal). For example, when the user switches an accessed AMF, the UDM will also send a deregistration message to the old AMF, requiring the old AMF to delete user-related information.

To better understand a method for verifying a GPSI and an apparatus disclosed in the embodiments of the disclosure, the following first describes a communication system applicable to the embodiments of the disclosure.

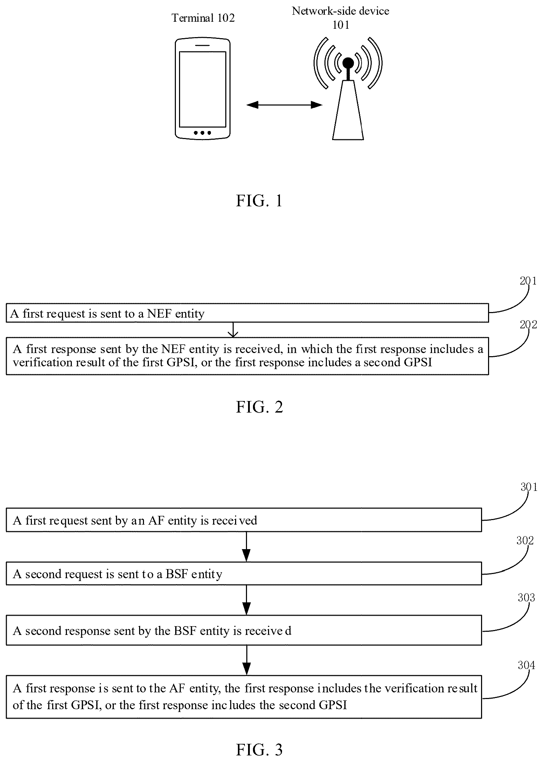

Please refer to FIG. 1, which is a schematic diagram of a communication system provided by an embodiment of the disclosure. This communication system may include but is not limited to one network-side device and one terminal. The number and form of devices shown in FIG. 1 are for illustration only and do not constitute a limitation on the embodiments of the disclosure. In practical applications, the communication system may include two or more network-side devices and two or more terminals. The communication system shown in FIG. 1 includes one network-side device 101 and one terminal 102.

It should be noted that the technical solutions of the embodiments of the disclosure may be applied to various communication systems. For example: a long term evolution (LTE) system, a 5th generation (5G) mobile communication system, a 5G new radio (NR) system, or other future new-type mobile communication systems.

The network-side device 101 in the embodiments of the disclosure is an entity on the network side for transmitting or receiving signals, and is a device for communicating with a terminal. The network-side device 101 may be a base transceiver station (BTS) in a global system for mobile communications (GSM) system or a code division multiple access (CDMA) system, a nodeB (NB) in a wideband code division multiple access (WCDMA) system, an evolved nodeB (eNB or eNodeB) in an LTE system, a wireless controller in a cloud radio access network (CRAN) scenario, a radio network controller (RNC), a base station controller (BSC), a home base station (e.g., home evolved nodeB or home nodeB, HNB), a baseband unit (BBU), or the network-side device may be a relay station, an access point, a vehicle-mounted device, a wearable device, a network-side device in a 5G network, a network-side device in a future evolved PLMN network, etc. The network-side device 101 may also be an access point (AP) in a wireless local area ntwork (WLAN), a wireless relay node, a wireless backhaul node, a transmission point (TP), or a transmission and reception point (TRP), etc., or a gNB or a transmission point (TRP or TP) in a new radio (NR) system, or one or a group of antenna panels (including a plurality of antenna panels) of a base station in a 5G system, or a network node constituting a gNB or a transmission point, such as a baseband unit (BBU) or a distributed unit (DU), etc. The embodiments of the disclosure do not limit the specific technology and specific device form adopted by the network-side device. The network-side device provided in the embodiments of the disclosure may be composed of a central unit (CU) and a distributed unit (DU), where the CU may also be called a control unit. The structure using CU-DU may split the network-side device (e.g., protocol layers of the network-side device), with functions of some protocol layers placed in the CU for centralized control, and functions of the remaining part or all of the protocol layers distributed in the DU, with the CU centrally controlling the DU.

In the embodiments of the disclosure, the network-side device 101 may be an AF entity on a network side, or may be a NEF entity on the network side, or may be a BSF entity on the network side, or may be a UDM entity on the network side, etc., which is not limited in the disclosure.

The terminal 102 in the embodiments of the disclosure may be a device that provides voice/data connectivity to users, such as a handheld device with wireless connection function, a vehicle-mounted device, etc. Some examples of the terminal include: a mobile phone, a tablet computers, a laptop computer, a palmtop computer, a mobile internet devices (MID), a wearable device, a virtual reality (VR) device, a augmented reality (AR) device, a wireless terminal in industrial control, a wireless terminal in self-driving, a wireless terminal in remote medical surgery, a wireless terminal in smart grids, a wireless terminal in transportation safety, a wireless terminal in smart cities, a wireless terminal in smart homes, a cellular phone, a cordless phone, a session initiation protocol (SIP) phone, a wireless local loop (WLL) station, a personal digital assistant (PDA), a handheld device with wireless communication function, a computing device or other processing devices connected to a wireless modem, a vehicle-mounted device, a wearable device, a terminal in the 5G network, a terminal in the future evolved PLMN network, and/or any other suitable devices for communicating over a wireless communication system. The embodiments of the disclosure do not limit this.

The wearable device, also referred to as a wearable smart device, is a general term for wearable devices developed by applying wearable technology to intelligently design daily wearables, such as a glass, a bracelet, a watch, clothing, shoes, and the like. The wearable device is a portable device that is either worn directly on the body or integrated into the user's clothing or accessories. The wearable device is not merely a hardware device, also achieves powerful functions through software support, data interaction, and cloud interaction. In a broad sense, the wearable smart device includes those with full functions and a large size, which may implement complete or partial functions independently without relying on a smartphone (e.g., a smartwatch or smart glasses), as well as those that focus only on a specific type of application function and need to be used in conjunction with other devices such as the smartphone (e.g., various smart bracelets and smart jewelry for physical sign monitoring).

In addition, in the embodiments of the disclosure, the terminal 102 may also be a terminal in an Internet of Things (IoT) system. IoT is an important part of the future development of information technology, and its main technical feature is connecting objects to the network through communication technology, thereby realizing an intelligent network for human-machine interconnection and thing-thing interconnection.

Furthermore, in the embodiments of the disclosure, the terminal 102 may also include a smart printer, a train detector, and a gas station sensor. Their main functions include collecting data (for some terminals), receiving control information and downlink data from a network-side device, and transmitting electromagnetic waves to send uplink data to the network-side device.

It should be noted that the technical solutions of the embodiments of the disclosure may be applied to various communication systems, for example, the LTE system, the 5G mobile communication system, the 5G NR system, or other future new-type mobile communication systems.

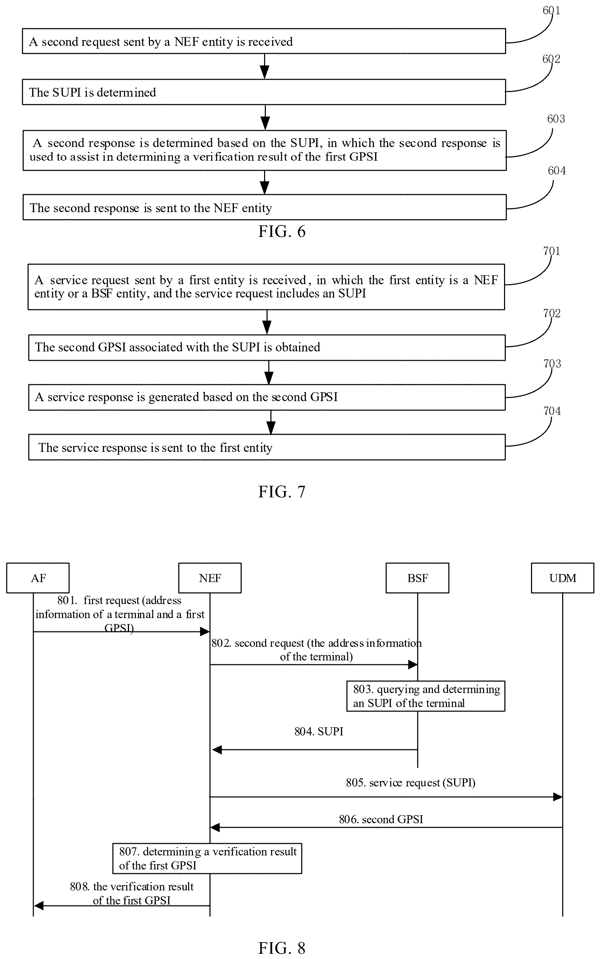

The AF entity provided in the embodiments of the disclosure may execute the method shown in the embodiment of FIG. 2; the NEF entity provided in the embodiments of the disclosure may execute the methods shown in the embodiments of FIGS. 3 to 5; the BSF entity provided in the embodiments of the disclosure may execute the method shown in the embodiment of FIG. 6; and the UDM entity may execute the method shown in the embodiment of FIG. 7.

It should be understood that the communication system described in the embodiments of the disclosure is for the purpose of explaining the technical solutions of the embodiments more clearly, and does not constitute a limitation on the technical solutions provided by the embodiments of the disclosure. As those of ordinary skill in the art know, with the evolution of system architectures and the emergence of new service scenarios, the technical solutions provided by the embodiments of the disclosure are also applicable to similar technical problems.

In addition, to facilitate understanding of the embodiments of the disclosure, the following notes are provided.

First, in the disclosure, terms like "first", "second" and various numerical designations are only used for distinction to facilitate description, and are not intended to limit the scope of the embodiments of the disclosure. For example, they may be used to distinguish different types of information, different terminals, etc.

Second, the "protocol" mentioned in the embodiments of the disclosure may refer to standard protocols in the field of communications, including but not limited to the LTE protocol, NR protocol, and related protocols applied in future communication systems, which is not limited by the disclosure.

Third, the embodiments of the disclosure disclose a plurality of implementations to clearly illustrate the technical solutions of the disclosure. Those skilled in the art understand that the plurality of embodiments provided herein may be implemented independently, or implemented in combination with methods of other embodiments of the disclosure, or implemented independently or in combination with certain methods in other related arts. The disclosure does not limit this.

In edge application service scenarios, an ECS or an EES provides services for an EEC based on the GPSI provided by the EEC. In a case where the GPSI provided by the EEC is not its own GPSI, the ECS/EES may be misled into providing a service, which may only be provided for a victim UE, to a malicious UE (EEC), leading to unauthorized service access. In some implementations, the service provided to the malicious UE may be charged on the victim UE, resulting in charging invalidation.

In the disclosure, to address the above scenarios, once the ECS/EES receives the GPSI, the ECS/EES may verify the legitimacy of the received GPSI to prevent providing an unauthorized service and to avoid the charging invalidation.

The following describes in detail the method and apparatus for verifying a GPSI provided by the disclosure with reference to the accompanying drawings.

Referring to FIG. 2, FIG. 2 is a flowchart of a method for verifying a GPSI provided by an embodiment of the disclosure. As shown in FIG. 2, the method is performed by an AF entity-for example, an ECS or an EES. The method may include, but is not limited to, the following steps.

At step 201, a first request is sent to a NEF entity.

In the disclosure, after receiving a first GPSI provided by a terminal or an EEC running on the terminal, the AF may send the first request to the NEF to verify the first GPSI.

In some implementations, the AF entity may send the first request to a NEF entity via a "Nnef_UEId_Get" service. In some implementations, the AF entity may use another service operation (e.g., a newly defined service operation) to send the first request to the NEF entity. The disclosure does not limit this.

In some implementations, the first request includes at least one of: the first GPSI, address information of the terminal, an identifier of the AF entity, edge data network (EDN) information, provider information of the AF entity, S-NSSAI, or DNN information.

The first GPSI may be a mobile subscriber international integrated services digital network/public switched telephone network (ISDN/PSTN) number (MSISDN) of the terminal, or may also be another external identifier of the terminal (e.g., an email address), which is not limited in the disclosure. The address information of the terminal may be an internet protocol (IP) address of the terminal, or may also be a media access control (MAC) address (also referred to as a local area network address) of the terminal. The identifier of the AF entity may be any identifier that may uniquely identify the AF entity. The EDN information may be an identifier of an EDN entity, or any other information that may uniquely identify the EDN entity.

At step 202, a first response sent by the NEF entity is received, in which the first response includes a verification result of the first GPSI, or the first response includes a second GPSI.

The verification result of the first GPSI indicates whether the first GPSI is valid. The second GPSI is a GPSI stored on a core network side and associated with the terminal. The second GPSI may be an MSISDN or an external identifier (e.g., an email address). In addition, the first response may include one second GPSI or a plurality of second GPSIs. For example, the first response may include only one MSISDN, or only one external identifier, or one MSISDN and one external identifier, or two MSISDNs. The disclosure does not limit this.

In some implementations, in a case where the first request includes the first GPSI, the first response may include the verification result of the first GPSI. Thus, the AF entity may provide a service to the corresponding terminal based on this verification result.

In some implementations, when the AF entity does not send the first GPSI to the NEF entity, the first response the AF entity receives may include the second GPSI. The AF entity may then determine whether the first GPSI passes verification based on whether the first GPSI is identical to the second GPSI.

For example, after receiving the first GPSI sent by the terminal, the AF entity may request the second GPSI of the terminal (stored on the network side) via the first request. The AF entity then compares the first GPSI with the second GPSI, determines whether the first GPSI passes the verification based on whether the first GPSI is same with the second GPSI, and further determines whether to provide a service to the terminal. In this way, unauthorized service provision and charging invalidation may be avoided.

In summary, after receiving the first GPSI sent by the terminal, the AF entity may send the first request to the NEF entity to verify the first GPSI. By verifying the first GPSI of the terminal, the AF entity may be prevented from providing unauthorized services, and the charging invalidation may be avoided, thereby improving a reliability of edge services.

Referring to FIG. 3, FIG. 3 is a flowchart of a method for verifying a GPSI provided by another embodiment of the disclosure. As shown in FIG. 3, the method is performed by an NEF entity. The method may include, but is not limited to, the following steps.

At step 301, a first request sent by an AF entity is received.

In some implementations, the first request includes at least one of: a first GPSI, address information of a terminal, an identifier of the AF entity, EDN information, provider information of the AF entity, S-NSSAI, or DNN information.

The first GPSI may be a MSISDN provided by the terminal or an EEC running on the terminal, or may also be another external identifier (e.g., an email address), which is not limited in the disclosure. The address information of the terminal may be an IP address of the terminal, or may also be a MAC address (also referred to as a local area network address) of the terminal. The identifier of the AF entity may be any identifier that may uniquely identify the AF entity. The EDN information may be an identifier of an EDN entity, or any other information that may uniquely identify the EDN entity.

In some implementations, in a case where the first request does not include the EDN information, the NEF entity may determine the EDN information based on the identifier of the AF entity, the provider information of the AF entity, etc., contained in the first request.

In the disclosure, after receiving the first request, the NEF entity may first perform authorization verification on the AF entity. If the AF entity is not authorized, the NEF entity may directly return an authorization failure result to the AF entity. If the AF entity is an authorized entity, the NEF entity may proceed with the following steps, such as determining the EDN information.

At step 302: a second request is sent to a BSF entity.

In the disclosure, after receiving the first request for verifying the first GPSI sent by the AF entity, the NEF entity may first send the second request to the BSF entity to request a subscription permanent identifier (SUPI) of the terminal, or to request the BSF entity to verify the first GPSI.

In some implementations, the NEF entity may send the second request to the BSF entity via a "Nbsf_Management_Discovery" service. In some implementations, the NEF entity may use another service operation (e.g., a newly defined service operation) to send the second request to the BSF entity. The disclosure does not limit this.

In some implementations, the second request includes at least one of: the address information of the terminal, the EDN information, or the first GPSI.

It should be noted that if the second request does not include the first GPSI, the second request is used to request the BSF entity for the SUPI of the terminal. If the second request includes the first GPSI, the second request is used to request the BSF entity for a verification result of the first GPSI.

At step 303, a second response sent by the BSF entity is received.

In some implementations, the second response includes the verification result of the first GPSI. It may be understood that in this case, the second request includes the first GPSI.

In some implementations, the second response includes a second GPSI. The second GPSI is a GPSI stored on the core network side and associated with the terminal. The second GPSI may be an MSISDN or an external identifier (e.g., an email address). In addition, the second response may include one second GPSI or a plurality of second GPSIs. For example, the second response may include only one MSISDN, only one external identifier, one MSISDN and one external identifier, or two MSISDNs. The disclosure does not limit this.

In some implementations, the second response includes the SUPI.

At step 304, a first response is sent to the AF entity, the first response includes the verification result of the first GPSI, or the first response includes the second GPSI.

In the disclosure, after receiving the second response, the NEF entity, in a case where the second response includes the verification result of the first GPSI, may directly send the verification result of the first GPSI to the AF entity via the first response.

In some implementations, in a case where the second response includes the second GPSI and the first request includes the first GPSI, the NEF entity may determine the verification result of the first GPSI by determining whether the second GPSI is identical to the first GPSI, and then send this verification result to the AF entity.

In some implementations, in a case where the second response includes the second GPSI and the first request does not include the first GPSI, the NEF entity may directly send the second GPSI to the AF entity.

In some implementations, in a case where the second response includes neither the SUPI, nor the verification result of the first GPSI, nor the second GPSI, this indicates that the BSF entity may not store the SUPI of the terminal, the verification of the first GPSI of the terminal fails, or the BSF entity does not obtain the second GPSI of the terminal. In this case, the NEF entity may determine that the first GPSI fails the verification.

In summary, after receiving the first request from the AF entity, the NEF entity first sends the second request to the BSF entity. After receiving the second response from the BSF entity, the NEF entity then sends either the verification result of the first GPSI or the second GPSI to the AF entity via the first response. By verifying the first GPSI of the terminal, the AF entity may be prevented from providing unauthorized services, and the charging invalidation may be avoided, thereby improving the reliability of edge services.

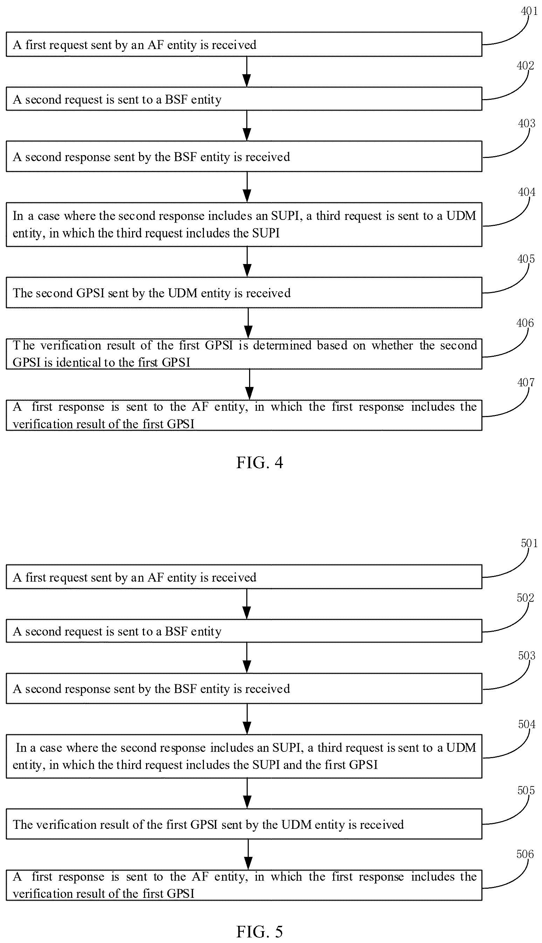

Referring to FIG. 4, FIG. 4 is a flowchart of a method for verifying a GPSI provided by another embodiment of the disclosure. As shown in FIG. 4, the method is performed by an NEF entity. The method may include, but is not limited to, the following steps.

At step 401, a first request sent by an AF entity is received.

At step 402: a second request is sent to a BSF entity.

At step 403, a second response sent by the BSF entity is received.

The specific implementations of steps 401 to 403 may refer to the detailed descriptions in other embodiments of the disclosure, and are not be repeated here.

At step 404, in a case where the second response includes an SUPI, a third request is sent to a UDM entity, in which the third request includes the SUPI.

In some implementations, the NEF entity may send the third request to the UDM entity via a "Nudm_SDM_Get" service to obtain the second GPSI. In some implementations, the NEF entity may use another service operation (e.g., a newly defined service operation) to send the third request to the UDM entity. The disclosure does not limit this.

At step 405, the second GPSI sent by the UDM entity is received.

At step 406, the verification result of the first GPSI is determined based on whether the second GPSI is identical to the first GPSI.

In the disclosure, after receiving the SUPI sent by the BSF entity, the NEF entity may send the third request to the UDM entity to obtain the second GPSI of the terminal stored on the network side. After receiving the second GPSI sent by the UDM entity, the NEF entity may determine whether the second GPSI is identical to the first GPSI. In a case where the second GPSI is identical to the first GPSI, the first GPSI is determined to pass the verification; otherwise, the first GPSI is determined to fail the verification.

At step 407, a first response is sent to the AF entity, in which the first response includes the verification result of the first GPSI.

The specific implementations of step 407 may refer to the detailed descriptions in other embodiments of the disclosure, and are not be repeated here.

In summary, after receiving the first request from the AF entity, the NEF entity first sends the second request to the BSF entity. After receiving the SUPI sent by the BSF entity, the NEF entity sends the third request to the UDM entity based on the SUPI. After receiving the second GPSI sent by the UDM entity, the NEF entity determines the verification result of the first GPSI by determining whether the second GPSI is identical to the first GPSI, and sends the verification result of the first GPSI to the AF entity via the first response. By verifying the first GPSI of the terminal, the AF entity may be prevented from providing unauthorized services, and the charging invalidation may be avoided, thereby improving the reliability of edge services.

Referring to FIG. 5, FIG. 5 is a flowchart of a method for verifying a GPSI provided by another embodiment of the disclosure. As shown in FIG. 5, the method is performed by an NEF entity. The method may include, but is not limited to, the following steps.

At step 501, a first request sent by an AF entity is received.

At step 502: a second request is sent to a BSF entity.

At step 503, a second response sent by the BSF entity is received.

The specific implementations of steps 501 to 503 may refer to the detailed descriptions in other embodiments of the disclosure, and are not be repeated here.

At step 504, in a case where the second response includes an SUPI, a third request is sent to a UDM entity, in which the third request includes the SUPI and the first GPSI.

In some implementations, the NEF entity may send the third request to the UDM entity via the "Nudm_SDM_Get" service to obtain the verification result of the first GPSI. In some implementations, the NEF entity may use another service operation (e.g., a newly defined service operation) to send the third request to the UDM entity. The disclosure does not limit this.

At step 505, the verification result of the first GPSI sent by the UDM entity is received.

In the disclosure, after receiving the SUPI sent by the BSF entity, the NEF entity may send the third request to the UDM entity, requesting the UDM entity to verify the first GPSI. Then, the NEF entity may receive the verification result of the first GPSI sent by the UDM entity.

At step 506, a first response is sent to the AF entity, in which the first response includes the verification result of the first GPSI.

The specific implementations of step506 may refer to the detailed descriptions in other embodiments of the disclosure, and are not be repeated here.

In summary, after receiving the first request from the AF entity, the NEF entity first sends the second request to the BSF entity. After receiving the SUPI sent by the BSF entity, the NEF entity sends the third request to the UDM entity based on the SUPI, and receives the verification result of the first GPSI sent by the UDM entity. Finally, the NEF entity sends this verification result to the AF entity via the first response. By verifying the first GPSI of the terminal, the AF entity may be prevented from providing unauthorized services, and the charging invalidation may be avoided, thereby improving the reliability of edge services.

Referring to FIG. 6, FIG. 6 is a flowchart of a method for verifying a GPSI provided by another embodiment of the disclosure. As shown in FIG. 6, the method is performed by a BSF entity. The method may include, but is not limited to, the following steps.

At step 601, a second request sent by a NEF entity is received.

The second request is used to request an SUPI of a terminal, or to request verification for a first GPSI, or to request a second GPSI of the terminal. The disclosure does not limit this.

The first GPSI may be a MSISDN provided by the terminal or an EEC running on the terminal, or may also be another external identifier (e.g., an email address), which is not limited in the disclosure. The second GPSI is a GPSI stored on the core network side and associated with the terminal. The second GPSI may be an MSISDN or an external identifier (e.g., an email address). In addition, the core network side may store one second GPSI or a plurality of second GPSIs. For example, the core network side may store only one MSISDN, only one external identifier, one MSISDN and one external identifier, or two MSISDNs. The disclosure does not limit this.

In some implementations, the second request includes at least one of: address information of the terminal, EDN information, or the first GPSI.

At step 602, the SUPI is determined.

In the disclosure, in a case where the BSF entity includes session binding information of the terminal, the BSF entity may obtain the SUPI of the terminal from the session binding information.

At step 603, a second response is determined based on the SUPI, in which the second response is used to assist in determining a verification result of the first GPSI.

The second response may contain the second GPSI, or the verification result of the first GPSI, or the SUPI, which is not limited in the disclosure.

In some implementations, in a case where the second request does not include the first GPSI, the BSF entity may generate the second response including the SUPI.

In some implementations, after determining the SUPI, the BSF entity may send a fourth request to a UDM entity based on the SUPI to ask the UDM entity to verify the first GPSI or to request the UDM entity to return the second GPSI. After receiving a fourth response sent by the UDM entity, the BSF entity may generate the second response based on the fourth response.

In some implementations, the BSF entity may send the fourth request to the UDM entity via the "Nudm_SDM_Get" service to obtain the second GPSI and/or the verification result of the first GPSI. In some implementations, the BSF entity may use another service operation (e.g., a newly defined service operation) to send the fourth request to the UDM entity. The disclosure does not limit this.

In some implementations, in a case where the fourth response includes the second GPSI, the BSF entity may generate the second response including the second GPSI.

In some implementations, in a case where the fourth response includes the verification result of the first GPSI, the BSF entity may generate the second response including the verification result of the first GPSI.

In some implementations, in a case where the fourth response includes the second GPSI, the BSF entity may generate the second response based on whether the second GPSI is identical to the first GPSI.

At step 604, the second response is sent to the NEF entity.

After determining the second response, the BSF entity may send the second response to the NEF entity.

In summary, after receiving the second request from the NEF entity, the BSF entity first determines the SUPI of the terminal, then determines the second response based on the SUPI, and sends the second response to the NEF entity. By verifying the first GPSI of the terminal, the AF entity may be prevented from providing unauthorized services, and the charging invalidation may be avoided, thereby improving the reliability of edge services.

Referring to FIG. 7, FIG. 7 is a flowchart of a method for verifying a GPSI provided by another embodiment of the disclosure. As shown in FIG. 7, the method is performed by a UDM entity. The method may include, but is not limited to, the following steps.

At step 701, a service request sent by a first entity is received, in which the first entity is a NEF entity or a BSF entity, and the service request includes an SUPI.

The service request is used to request a stored second GPSI of a terminal, or to request verification for a first GPSI of the terminal. The disclosure does not limit this.

The first GPSI may be a MSISDN provided by the terminal or an EEC running on the terminal, or may also be another external identifier (e.g., an email address), which is not limited in the disclosure. The second GPSI is a GPSI stored on the core network side and associated with the terminal. The second GPSI may be an MSISDN or an external identifier (e.g., an email address). In addition, the core network side may store one second GPSI or a plurality of second GPSIs. For example, the core network side may store only one MSISDN, only one external identifier, one MSISDN and one external identifier, or two MSISDNs. The disclosure does not limit this.

In some possible implementations, the UDM entity may receive the service request sent by the NEF entity or the BSF entity via the "Nudm_SDM_Get" service. In some possible implementations, the UDM entity may use another service operation (e.g., a newly defined service operation) to receive the service request from the NEF entity or the BSF entity. The disclosure does not limit this.

At step 702, the second GPSI associated with the SUPI is obtained.

In the disclosure, after receiving the service request, the UDM entity may query the second GPSI associated with the terminal from a UDR entity based on the SUPI.

At step 703, a service response is generated based on the second GPSI.

In some possible implementations, in a case where the service request does not include the first GPSI, the UDM entity may generate the service response including the second GPSI. That is, the service request is used to request the second GPSI, the UDM entity generates the service response including the second GPSI after querying the second GPSI.

In some possible implementations, in a case where the service request contains the first GPSI, the UDM entity may generate the service response including the verification result of the first GPSI based on whether the second GPSI is identical to the first GPSI.

In other words, in a case where the received service request is used for verifying the first GPSI, the UDM entity determines whether the second GPSI is identical to the first GPSI after querying the second GPSI. If the second GPSI is identical to the first GPSI, the verification result of the first GPSI is determined to be "passed"; otherwise, the verification result of the first GPSI is determined to be "failed".

In some possible implementations, in a case where the UDM entity fails to obtain the second GPSI associated with the SUPI, the UDM entity may directly determine the verification result of the first GPSI to be "failed", or directly generate the service response that includes neither the second GPSI nor the verification result of the first GPSI.

At step 704, the service response is sent to the first entity.

In summary, after receiving the service request from the first entity, the UDM entity first obtains the second GPSI associated with the SUPI, then generates the service response based on the second GPSI, and sends the service response to the first entity. By verifying the first GPSI of the terminal, the AF entity may be prevented from providing unauthorized services, and the charging invalidation may be avoided, thereby improving the reliability of edge services.

Referring to FIG. 8, FIG. 8 is a signaling interaction diagram of a method for verifying a GPSI provided by an embodiment of the disclosure. As shown in FIG. 8, the method may include, but is not limited to, the following steps.

At step 801, an AF entity sends a first request to a NEF entity, in which the first request includes address information of a terminal and a first GPSI.

At step 802, the NEF entity sends a second request to a BSF entity, in which the second request includes the address information of the terminal.

In some possible implementations, the second request may further contain EDN information.

At step 803, the BSF entity queries and determines an SUPI of the terminal.

At step 804, the BSF entity sends the SUPI to the NEF entity.

At step 805, the NEF entity sends a service request to a UDM entity, in which the service request contains the SUPI.

At step 806, the UDM entity sends a second GPSI to the NEF entity.

At step 807, the NEF entity determines a verification result of the first GPSI based on whether the second GPSI is identical to the first GPSI.

At step 808, the NEF entity returns the verification result of the first GPSI to the AF entity.

Therefore, the NEF entity verifies the first GPSI of the terminal, preventing the AF entity from providing unauthorized services, and the charging invalidation may be avoided, thereby improving the reliability of edge services.

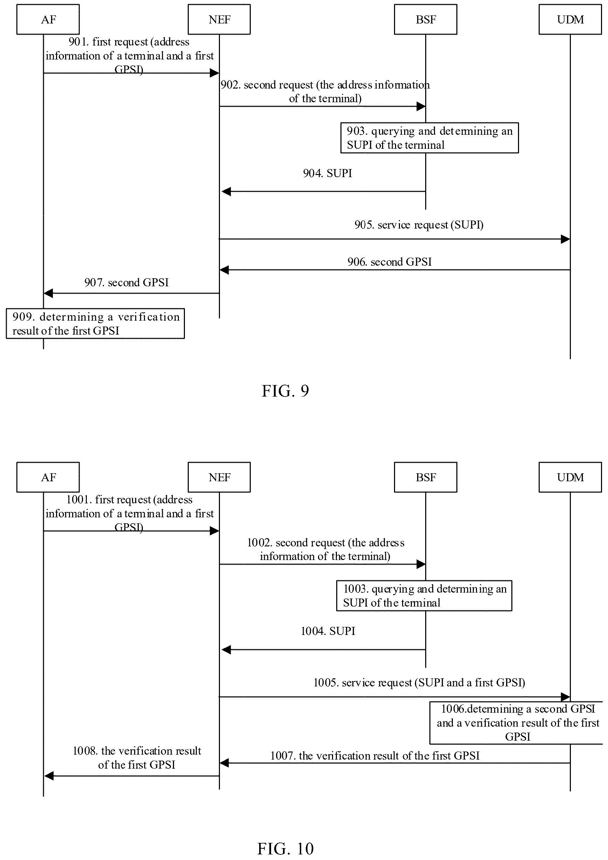

Referring to FIG. 9, FIG. 9 is a signaling interaction diagram of a method for verifying a GPSI provided by an embodiment of the disclosure. As shown in FIG. 9, the method may include, but is not limited to, the following steps.

At step 901, an AF entity sends a first request to a NEF entity, in which the first request contains address information of a terminal.

At step 902, the NEF entity sends a second request to a BSF entity, in which the second request contains the address information of the terminal.

In some possible implementations, the second request may further contain EDN information.

At step 903, the BSF entity queries and determines an SUPI of the terminal.

At step 904, the BSF entity sends the SUPI to the NEF entity.

At step 905, the NEF entity sends a service request to a UDM entity, in which the service request contains the SUPI.

At step 906, the UDM entity sends a second GPSI to the NEF entity.

At step 907, the NEF entity sent the second GPSI to the AF entity.

At step 908, the AF entity determines a verification result of the first GPSI based on whether the second GPSI is identical to the first GPSI.

Therefore, the AF entity verifies the first GPSI of the terminal, preventing the AF entity from providing unauthorized services, and the charging invalidation may be avoided, thereby improving the reliability of edge services.

Referring to FIG. 10, FIG. 10 is a signaling interaction diagram of a method for verifying a GPSI provided by an embodiment of the disclosure. As shown in FIG. 10, the method may include, but is not limited to, the following steps.

At step 1001, an AF entity sends a first request to a NEF entity, in which the first request contains address information of a terminal and a first GPSI.

At step 1002, the NEF entity sends a second request to a BSF entity, in which the second request contains the address information of the terminal.

In some possible implementations, the second request may further contain EDN information.

At step 1003, the BSF entity queries and determines an SUPI.

At step 1004, the BSF entity sends the SUPI to the NEF entity.

At step 1005, the NEF entity sends a service request to a UDM entity, in which the service request contains the SUPI and the first GPSI.

At step 1006, the UDM entity determines a second GPSI, and determines a verification result of the first GPSI based on the second GPSI.

At step 1007, the UDM entity sends the verification result of the first GPSI to the NEF entity.

At step 1008, the NEF entity sends the verification result of the first GPSI to the AF entity.

Therefore, the UDM entity verifies the first GPSI of the terminal, preventing the AF entity from providing unauthorized services, and the charging invalidation may be avoided, thereby improving the reliability of edge services.

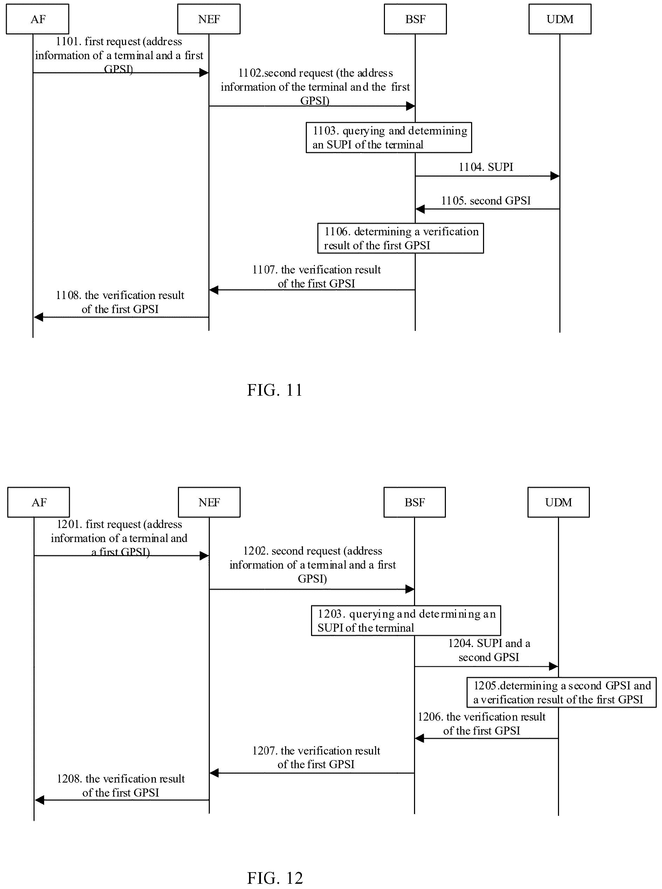

Referring to FIG. 11, FIG. 11 is a signaling interaction diagram of a method for verifying a GPSI provided by an embodiment of the disclosure. As shown in FIG. 11, the method may include, but is not limited to, the following steps.

At step 1101, an AF entity sends a first request to a NEF entity, in which the first request contains address information of a terminal and a first GPSI.

At step 1102, the NEF entity sends a second request to a BSF entity, in which the second request contains the address information of the terminal and the first GPSI.

In some possible implementations, the second request may further contain EDN information.

At step 1103, the BSF entity queries and determines an SUPI.

At step 1104, the BSF entity sends a service request to the UDM entity, in which the service request contains the SUPI.

At step 1105, the UDM entity sends a second GPSI to a BSF entity.

At step 1106, the BSF entity determines a verification result of the first GPSI based on the second GPSI.

At step 1107, the BSF entity sends the verification result of the first GPSI to the NEF entity.

At step 1108, the NEF entity sends the verification result of the first GPSI to the AF entity.

Therefore, the BSF entity verifies the first GPSI of the terminal, preventing the AF entity from providing unauthorized services, and the charging invalidation may be avoided, thereby improving the reliability of edge services.

Referring to FIG. 12, FIG. 12 is a signaling interaction diagram of a method for verifying a GPSI provided by an embodiment of the disclosure. As shown in FIG. 12, the method may include, but is not limited to, the following steps.

At step 1201, an AF entity sends a first request to a NEF entity, in which the first request contains address information of a terminal and a first GPSI.

At step 1202, the NEF entity sends a second request to a BSF entity, in which the second request contains the address information of the terminal and the first GPSI.

In some possible implementations, the second request may further contain EDN information.

At step 1203, the BSF entity queries and determines an SUPI.

At step 1204, the BSF entity sends a service request to a UDM entity, in which the service request contains the SUPI and the first GPSI.

At step 1205, the UDM entity determines a second GPSI and confirms a verification result of the first GPSI based on the second GPSI.

At step 1206, the UDM entity sends the verification result of the first GPSI to the BSF entity.

At step 1207, the BSF entity sends the verification result of the first GPSI to the NEF entity.

At step 1208, the NEF entity sends the verification result of the first GPSI to the AF entity.

Therefore, the UDM entity verifies the first GPSI of the terminal, preventing the AF entity from providing unauthorized services, and the charging invalidation may be avoided, thereby improving the reliability of edge services.

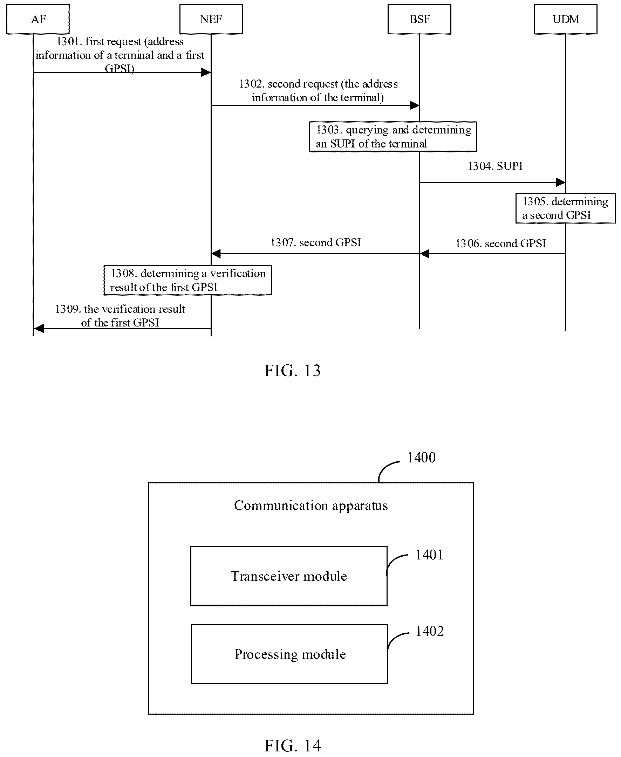

Referring to FIG. 13, FIG. 13 is a signaling interaction diagram of a method for verifying a GPSI provided by an embodiment of the disclosure. As shown in FIG. 13, the method may include, but is not limited to, the following steps.

At step 1301, an AF entity sends a first request to a NEF entity, in which the first request contains address information of a terminal and a first GPSI.

At step 1302, the NEF entity sends a second request to a BSF entity, in which the second request contains the address information of the terminal.

In some possible implementations, the second request may further contain EDN information.

At step 1303, the BSF entity queries and determines an SUPI.

At step 1304, the BSF entity sends a service request to a UDM entity, in which the service request contains the SUPI.

At step 1305, the UDM entity queries and determines a second GPSI.

At step 1306, the UDM entity sends the second GPSI to the BSF entity.

At step 1307, the BSF entity sends the second GPSI to the NEF entity.

At step 1308, the NEF entity determines a verification result of the first GPSI based on the second GPSI.

At step 1309, the NEF entity sends the verification result of the first GPSI to the AF entity.

Therefore, the NEF entity verifies the first GPSI of the terminal, preventing the AF entity from providing unauthorized services, and the charging invalidation may be avoided, thereby improving the reliability of edge services.

Referring to FIG. 14, FIG. 14 is a schematic diagram of a communication apparatus provided by an embodiment of the disclosure. A communication apparatus 1400 shown in FIG. 14 may include a transceiver module 1401 and a processing module 1402. The transceiver module may include a sending module and/or a reception module. The sending module is configured to implement a sending function, the reception module is configured to implement a receiving function, and the transceiver module may implement both the sending and/or receiving functions.

The communication apparatus 1400 may be an AF entity, an apparatus within the AF entity, or an apparatus that may be used in matching with the AF entity.

When the communication apparatus 1400 is on an AF entity side,
the transceiver module 1401 is configured to send a first request to a NEF entity.

The transceiver module 1401 is further configured to receive a first response sent by the NEF entity, in which the first response includes a verification result of a first GPSI, or the first response includes a second GPSI.

In some implementations, the first request includes at least one of: the first GPSI, address information of a terminal, an identifier of the AF entity, EDN information, provider information of the AF entity, S-NSSAI, or DNN information.

In some implementations, the processing module 1402 is configured to, in a case where the first response includes the second GPSI, determine whether the first GPSI passes verification based on whether the first GPSI is identical to the second GPSI.

In summary, the verification of the first GPSI of the terminal is implemented, preventing the AF entity from providing unauthorized services, and the charging invalidation may be avoided, thereby improving the reliability of edge services.

The communication apparatus 1400 may also be a NEF entity, an apparatus within the NEF entity, or an apparatus that may be used in matching with the NEF entity.

When the communication apparatus 1400 is on a NEF entity side,
the transceiver module 1401 is configured to receive a first request sent by an AF entity.

The transceiver module 1401 is further configured to send a second request to a BSF entity.

The transceiver module 1401 is further configured to receive a second response sent by the BSF entity.

The transceiver module 1401 is further configured to send a first response to the AF entity, in which the first response includes a verification result of a first GPSI, or the first response includes a second GPSI.

In some implementations, the second response includes the verification result of the first GPSI.

In some implementations, the second response includes the second GPSI.

In some implementations, the transceiver module 1401 is further configured to, in a case where the second response includes an SUPI, send a third request to a UDM entity, in which the third request includes the SUPI; and receive the second GPSI sent by the UDM entity.

The processing module 1402 is configured to determine the verification result of the first GPSI based on whether the second GPSI is identical to the first GPSI.

In some implementations, the transceiver module 1401 is further configured to, in a case where the second response includes an SUPI, send a third request to a UDM entity, in which the third request includes the SUPI and the first GPSI; and receive the verification result of the first GPSI sent by the UDM entity.

In some implementations, the processing module 1402 is further configured to, in a case where the second response includes the second GPSI, determine the verification result of the first GPSI based on whether the second GPSI is identical to the first GPSI.

In some implementations, the processing module 1402 is further configured to, in a case where the second response includes neither an SUPI, nor the verification result of the first GPSI, nor the second GPSI, determining that the first GPSI fails verification.

In some implementations, the first request includes at least one of: the first GPSI, address information of a terminal, an identifier of the AF entity, EDN information, provider information of the AF entity, S-NSSAI, or DNN information.

The second request includes at least one of: the address information of the terminal, the EDN information, or the first GPSI.

In some implementations, the processing module 1402 is further configured to obtain the EDN information from the first request; or
to obtain the EDN information according to the identifier of the AF entity and the provider information of the AF entity in the first request.

In summary, the verification of the first GPSI of the terminal is implemented, preventing the AF entity from providing unauthorized services, and the charging invalidation may be avoided, thereby improving the reliability of edge services.

The communication apparatus 1400 may be a BSF entity, an apparatus within the BSF entity, or an apparatus that may be used in matching with the BSF entity.

When the communication apparatus 1400 is on a BSF entity side,
the transceiver module 1401 is configured to receive a second request sent by a NEF entity.

The processing module 1402 is configured to determine an SUPI.

The processing module 1402 is further configured to determine a second response based on the SUPI, in which the second response is used to assist in determining a verification result of a first GPSI.

The transceiver module 1401 is further configured to send the second response to the NEF entity.

In some implementations, the processing module 1402 is further configured to, in a case where the second request does not include the first GPSI, generate the second response including the SUPI.

In some implementations, the transceiver module 1401 is further configured to send a fourth request to a UDM entity based on the SUPI; and receive a fourth response sent by the UDM entity.

The processing module 1402 is further configured to generate the second response according to the fourth response.

In some implementations, the processing module 1402 is further configured to:
in a case where the fourth response includes a second GPSI, generate the second response including the second GPSI;
in a case where the fourth response includes the verification result of the first GPSI, generating the second response including the verification result of the first GPSI; or
in a case where the fourth response includes a second GPSI, generate the second response based on whether the second GPSI is identical to the first GPSI.

In summary, the verification of the first GPSI of the terminal is implemented, preventing the AF entity from providing unauthorized services, and the charging invalidation may be avoided, thereby improving the reliability of edge services.

The communication apparatus 1400 may be a UDM entity, an apparatus within the UDM entity, or an apparatus that may be used in matching with the UDM entity.

When the communication apparatus 1400 is on a UDM entity side,
the transceiver module 1401 is configured to receiving a service request sent by a first entity, in which the first entity is a NEF entity or a BSF entity, and the service request includes an SUPI.

The processing module 1402 is configured to obtain a second GPSI associated with the SUPI.

The processing module 1402 is further configured to generate a service response based on the second GPSI.

The transceiver module 1401 is further configured to send the service response to the first entity.

In some implementations, the processing module 1402 is further configured to:
in a case where the service request does not include a first GPSI, generate the service response including the second GPSI; or
in a case where the service request includes a first GPSI, generate the service response including a verification result of the first GPSI based on whether the second GPSI is identical to the first GPSI.

In summary, the verification of the first GPSI of the terminal is implemented, preventing the AF entity from providing unauthorized services, and the charging invalidation may be avoided, thereby improving the reliability of edge services.

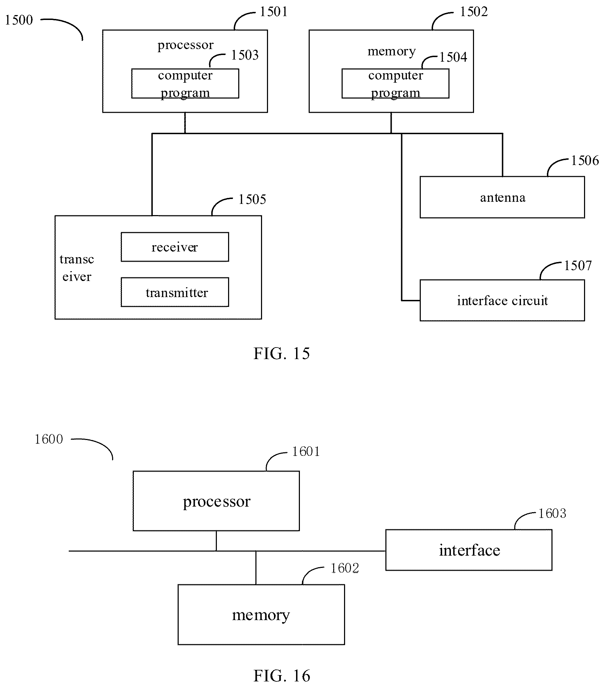

Please refer to FIG. 15, FIG. 15 is a block diagram of a communication apparatus 1500 according to an embodiment of the disclosure. The communication apparatus 1500 may be a network device, or a terminal, or a chip, a chip system, a processor, etc. that supports the network device to implement the method, or a chip, a chip system, a processor, etc. that supports the terminal to implement the method. The communication apparatus 1500 is configured to implement the method in the above method embodiments. For details, please refer to the description in the above method embodiments.

The communication apparatus 1500 may include one or more processors 1501. The processor 1501 may be a general-purpose processor or a special-purpose processor. For example, it may be a baseband processor or a central processing unit. The baseband processor is configured to process communication protocols and communication data, and the central processor is configured to control communication apparatuses (such as base stations, baseband chips, terminals, terminal chips, DU or CU, etc.) to execute computer programs and process computer program data.

In some implementations, the communication apparatus 1500 may also include one or more memories 1502 on which a computer program 1504 is stored. When the computer program 1504 is executed by the processor 1501, the communication apparatus 1500 implements the method in the above method embodiments. In some implementations, the memory 1502 may also store data. The communication apparatus 1500 and the memory 1502 may be set separately or integrated together.

In some implementations, the communication apparatus 1500 may also include a transceiver 1505 and an antenna 1506. The transceiver 1505 may be called a transceiving unit, a transceiving machine, or a transceiving circuit, etc., to achieve a transceiving function. The transceiver 1505 may include a receiver and a transmitter. The receiver may be called a receiver or a receiving circuit, etc., to achieve a receiving function; and the transmitter may be called a transmitter or a transmitting circuit, etc., to achieve a transmitting function.

In some implementations, the communication apparatus 1500 includes one or more interface circuits 1507. The interface circuit 1507 is configured to receive code instructions and transmit the code instructions to the processor 1501. When the code instructions are running on the processor 1501, the communication apparatus 1500 is caused to implement the method in the above method embodiments.

In an implementation, the processor 1501 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit or convey signals.

In an implementation, the processor 1501 may store a computer program 1503. When the computer program 1503 is running on the processor 1501, the communication apparatus 1500 is caused to implement the method in the above method embodiments. The computer program 1503 may be solidified in the processor 1501. In this way, the processor 1501 may be implemented in hardware.

In an implementation, the communication apparatus 1500 may include a circuit that may achieve the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the disclosure is not limited to this, and the structure of the communication apparatus may not be restricted by FIG. 15. The communication apparatus may be an independent device or part of a larger device. For example, the communication apparatus may be:
(1) an independent IC, or a chip, or a chip system or a subsystem;
(2) a collection including one or more IC, in some implementation, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to FIG. 16, which is a schematic diagram of a chip provided by an embodiment of the disclosure.

A chip 1600 includes a processor 1601 and an interface 1603. There may be one or more processors 1601, and there may be one or more interfaces 1603.

In the case where the chip is configured to implement the functions of the AF entity, the NEF entity, the BSF entity, or the UDM entity in the embodiments of the present disclosure,
the interface 1603 is configured to receive code instructions and transmit the code instructions to the processor; and
the processor 1601 is configured to run the code instructions to execute the method for verifying the GPSI as described in some of the above embodiments.

In some implementations, the chip 1600 further includes a memory 1602 for storing necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the disclosure further provide a communication system. The communication system includes the communication apparatus acting as the AF entity, the communication apparatus acting as the NEF entity, the communication apparatus acting as the BSF entity, and the communication apparatus acting as the UDM entity in the aforementioned embodiment of FIG. 15. In some other implementations, the communication system includes the communication apparatus acting as the AF entity, the communication apparatus acting as the NEF entity, the communication apparatus acting as the BSF entity, and the communication apparatus acting as the UDM entity in the aforementioned embodiment of FIG. 16.

The disclosure also provides a readable storage medium for storing instructions. When the instructions are executed by a computer, functions of any one of the above method embodiments are performed.

The disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more. The term "and/or" describes an association relationship between related objects, indicating that three types of relationships may exist. For example, "A and/or B" may mean: A exists alone, both A and B exist simultaneously, or B exists alone, where A and B may be singular or plural. The character "/" generally indicates that the associated objects before and after it have an "or" relationship. The expression "at least one of the following (items)" or similar expressions refers to any combination of these items, including any combination of a single item (piece) or multiple items (pieces). For example, "at least one of a, b, or c" may represent: a, or b, or c, or a and b, or a and c, or b and c, or a, b, and c. Here, a, b, and c may each be single or multiple, which is not limited in the disclosure. In the embodiment of the present disclosure, for a technical feature, the technical features in the technical feature are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A method for verifying a generic public subscription identifier (GPSI), performed by an application function (AF) entity, comprising:
sending a first request to a network exposure function (NEF) entity; and
receiving a first response sent by the NEF entity, wherein the first response comprises a verification result of a first GPSI, or the first response comprises a second GPSI.

2. The method according to claim 1, wherein the first request comprises at least one of: the first GPSI, address information of a terminal, an identifier of the AF entity, edge data network (EDN) information, provider information of the AF entity, single network slice selection assistance information (S-NSSAI), or data network name (DNN) information.

3. The method according to claim 1 or 2, further comprising:
in a case where the first response comprises the second GPSI, determining whether the first GPSI passes verification based on whether the first GPSI is identical to the second GPSI.

4. A method for verifying a generic public subscription identifier (GPSI), performed by a network exposure function (NEF) entity, comprising:
receiving a first request sent by an application function (AF) entity;
sending a second request to a bootstrapping server function (BSF) entity;
receiving a second response sent by the BSF entity; and
sending a first response to the AF entity, wherein the first response comprises a verification result of a first GPSI, or the first response comprises a second GPSI.

5. The method according to claim 4, wherein the second response comprises the verification result of the first GPSI.

6. The method according to claim 4, wherein the second response comprises the second GPSI.

7. The method according to claim 4, wherein before sending the first response to the AF entity, the method further comprises:
in a case where the second response comprises a subscription permanent identifier (SUPI), sending a third request to a unified data management (UDM) entity, wherein the third request comprises the SUPI;
receiving the second GPSI sent by the UDM entity; and
determining the verification result of the first GPSI based on whether the second GPSI is identical to the first GPSI.

8. The method according to claim 4, wherein before sending the first response to the AF entity, the method further comprises:
in a case where the second response comprises an SUPI, sending a third request to a UDM entity, wherein the third request comprises the SUPI and the first GPSI; and
receiving the verification result of the first GPSI sent by the UDM entity.

9. The method according to claim 4, wherein before sending the first response to the AF entity, the method further comprises:
in a case where the second response comprises the second GPSI, determining the verification result of the first GPSI based on whether the second GPSI is identical to the first GPSI.

10. The method according to claim 4, further comprising:
in a case where the second response comprises neither an SUPI, nor the verification result of the first GPSI, nor the second GPSI, determining that the first GPSI fails verification.

11. The method according to any one of claims 4-10, wherein the first request comprises at least one of: the first GPSI, address information of a terminal, an identifier of the AF entity, edge data network (EDN) information, provider information of the AF entity, single network slice selection assistance information (S-NSSAI), or data network name (DNN) information.

12. The method according to claim 11, further comprising:
obtaining the EDN information from the first request; or
obtaining the EDN information according to the identifier of the AF entity and the provider information of the AF entity in the first request.

13. A method for verifying a generic public subscription identifier (GPSI), performed by a bootstrapping server function (BSF) entity, comprising:
receiving a second request sent by a network exposure function (NEF) entity;
determining a subscription permanent identifier (SUPI);
determining a second response based on the SUPI, wherein the second response is used to assist in determining a verification result of a first GPSI; and
sending the second response to the NEF entity.

14. The method according to claim 13, wherein determining the second response based on the SUPI comprises:
in a case where the second request does not comprise the first GPSI, generating the second response comprising the SUPI.

15. The method according to claim 13, wherein determining the second response based on the SUPI comprises:
sending a fourth request to a unified data management (UDM) entity based on the SUPI;
receiving a fourth response sent by the UDM entity; and
generating the second response according to the fourth response.

16. The method according to claim 15, wherein generating the second response according to the fourth response comprises:
in a case where the fourth response comprises a second GPSI, generating the second response comprising the second GPSI; or
in a case where the fourth response comprises the verification result of the first GPSI, generating the second response comprising the verification result of the first GPSI; or
in a case where the fourth response comprises a second GPSI, generating the second response based on whether the second GPSI is identical to the first GPSI.

17. A method for verifying a generic public subscription identifier (GPSI), performed by a unified data management (UDM) entity, comprising:
receiving a service request sent by a first entity, wherein the first entity is a network exposure function (NEF) entity or a bootstrapping server function (BSF) entity, and the service request comprises a subscription permanent identifier (SUPI);
obtaining a second GPSI associated with the SUPI;
generating a service response based on the second GPSI; and
sending the service response to the first entity.

18. The method according to claim 17, wherein generating the service response based on the second GPSI comprises:
in a case where the service request does not comprise a first GPSI, generating the service response comprising the second GPSI; or
in a case where the service request comprises a first GPSI, generating the service response comprising a verification result of the first GPSI based on whether the second GPSI is identical to the first GPSI.

19. An application function (AF) entity, comprising: a transceiver module, configured to:
send a first request to a network exposure function (NEF) entity; and
receive a first response sent by the NEF entity, wherein the first response comprises a verification result of a first generic public subscription identifier (GPSI), or the first response comprises a second GPSI.

20. A network exposure function (NEF) entity, comprising: a transceiver module, configured to:
receive a first request sent by an application function (AF) entity;
send a second request to a bootstrapping server function (BSF) entity;
receive a second response sent by the BSF entity; and
send a first response to the AF entity, wherein the first response comprises a verification result of a first generic public subscription identifier (GPSI), or the first response comprises a second GPSI.

21. A bootstrapping server function (BSF) entity, comprising:
a transceiver module, configured to receive a second request sent by a network exposure function (NEF) entity; and
a processing module, configured to determine a subscription permanent identifier (SUPI);
wherein the processing module is further configured to determine a second response based on the SUPI, and the second response is used to assist in determining a verification result of a first generic public subscription identifier (GPSI); and
wherein the transceiver module is further configured to send the second response to the NEF entity.

22. A unified data management (UDM) entity, comprising:
a transceiver module, configured to receive a service request sent by a first entity, wherein the first entity is a network exposure function (NEF) entity or a bootstrapping server function (BSF) entity, and the service request comprises a subscription permanent identifier (SUPI); and
a processing module, configured to obtain a second generic public subscription identifier (GPSI) associated with the SUPI;
wherein the processing module is further configured to generate a service response based on the second GPSI; and
wherein the transceiver module is further configured to send the service response to the first entity.

23. A communication apparatus, comprising a processor and a memory storing a computer program which, when executed by the processor, cause the communication apparatus to perform the method according to any one of claims 1 to 3, or the method according to any one of claims 4 to 12, or the method according to any one of claims 13 to 16, or the method according to any one of claims 17 to 18.

24. A communication system, comprising an application function (AF) entity, a network exposure function (NEF) entity, a bootstrapping server function (BSF) entity, and a unified data management (UDM) entity;
wherein the AF entity is configured to execute the method according to any one of claims 1 to 3; the NEF entity is configured to execute the method according to any one of claims 4 to 12; the BSF entity is configured to execute the method according to any one of claims 13 to 16; and the UDM entity is configured to execute the method according to any one of claims 17 to 18.

25. A computer-readable storage medium, configured to store instructions that, when executed, cause the method according to any one of claims 1 to 3, or the method according to any one of claims 4 to 12, or the method according to any one of claims 13 to 16, or the method according to any one of claims 17 to 18 to be implemented.
